Europäisches Patentamt

European Patent Office

Office européen des brevets

(11) Numéro de publication: **0 359 608**
**A2**

# (12) DEMANDE DE BREVET EUROPEEN

(21) Numéro de dépôt: **89402252.4**

(22) Date de dépôt: **09.08.89**

(51) Int. Cl.⁵: **B 60 R 25/10**

(30) Priorité: **09.08.88 FR 8810755**

(43) Date de publication de la demande:
**21.03.90 Bulletin 90/12**

(84) Etats contractants désignés:
**AT BE CH DE ES GB GR IT LI LU NL SE**

(71) Demandeur: **Sté TEXTON**
**232 rue de Noisy le Sec**
**F-93170 Bagnolet (FR)**

(72) Inventeur: **Rolland Michel, Maurice, Pierre**
**162 rue de Rosny**
**93100 Montreuil (FR)**

**Barbotin Joel**
**56 rue Botzaris**
**75019 Paris (FR)**

(74) Mandataire: **Berger, Helmut et al**
**Cabinet Z. WEINSTEIN 20, avenue de Friedland**
**F-75008 Paris (FR)**

(54) **Procédé d'éjection de la mise en veille d'un système d'alarme à enclenchement automatique et un agencement pour la mise en oeuvre de ce procédé.**

(57) Selon ce procédé la mise en veille se fait par actionnement d'un premier organe de commande d'un contact électrique, tel que la clé de contact, la mise hors veille s'effectuant par actionnement d'un second organe de commande d'un contact électrique. Le procédé est caractérisé en ce que l'on utilise comme premier et second organes de commande le même organe tel que ladite clé de contact reliée à la borne d'entrée (BE) et assure la mise hors veille par un rétablissement du contact pendant une durée de temps prédéterminée.
Le système d'alarme est utilisable dans des véhicules automobiles.

EP 0 359 608 A2

# Description

## Procédé d'éjection de la mise en veille d'un système d'alarme à enclenchement automatique et un agencement pour la mise en oeuvre de ce procédé

L'invention concerne un procédé d'ejection de mise en veille d'un système d'alarme à enclenchement automatique notamment pour véhicule automobile et un agencement électrique pour la mise en oeuvre de ce procédé.

On connaît déjà des procédés et systèmes utilisés à cette fin, selon lesquels on met le système en veille par actionnement d'un premier organe de commande d'un contact électrique tel que la clé de contact dans le cas d'un véhicule automobile et assure la mise hors veille par actionnement d'un second organe de commande d'un contact électrique.

Les procédés et systèmes connus, ont pour inconvénient que ce second organe de contact est formé par un interrupteur supplémentaire ou un dispositif extérieur que le propriétaire par exemple du véhicule doit actionner, ce qui complique à la fois la structure de l'agencement et son utilisation.

La présente invention a pour but de palier à ces inconvénients.

Pour atteindre ce but, le procédé selon l'invention est caractérisé en ce que l'on utilise comme premier et second organes de commande le même organe tel que ladite clé de contact et assure la mise hors veille par un rétablissement du contact pendant une durée de temps prédéterminée.

L'agencement pour la mise en oeuvre de ce procédé est caractérisé en ce que le premier et le second organes de contact électrique sont formés par le même organe tel que la clé de contact d'un véhicule automobile.

Selon une caractéristique avantageuse de l'invention, l'agencement électrique comprend des moyens formant bascule et des moyens de circuit logique ainsi qu'un circuit de temporisation adapté pour retarder pendant une durée de temps prédéterminée un changement d'état du potentiel de commande des moyens formant bascule et des moyens de circuit logique pour empêcher la remise en veille de l'agencement lors de la nouvelle coupure de contact.

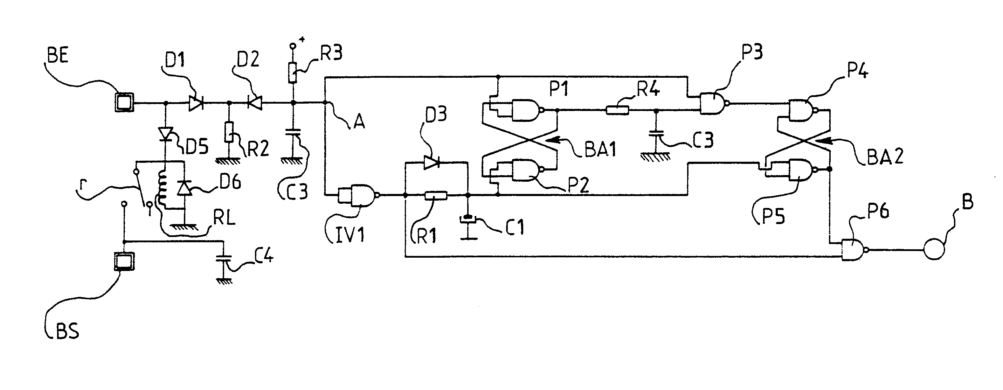

L'invention sera mieux comprise, et d'autres buts, caractéristiques, détails et avantages de celle-ci apparaîtront plus clairement au cours de la description explicative qui va suivre faite en référence à la figure unique représentant l'agencement électrique et donnée uniquement à titre d'exemple illustrant un mode de réalisation de l'invention.

Sur cette figure qui représente un mode de réalisation de l'invention à titre d'exemple, la borne d'entrée BE est reliée à la serrure de la clé de contact du véhicule et présente un potentiel positif lorsque la clé est dans sa position de contact dans la serrure. Cette borne est reliée par deux diodes D1, D2 montées en série mais polarisées de façon inverse directement à une entrée d'une bascule BA1 du type $\overline{R}\,\overline{S}$ et, par l'intermédiaire d'un élément inverseur IV1 et un circuit de temporisation formé par une résistance R1 en série et d'un condensateur C1 dont une borne est mise à la masse, à la deuxième entrée de la bascule BA1. Une diode D3 est montée en parallèle sur la résistance R3, la cathode étant située du côté de la bascule. Cette dernière est formée par deux portes NON-ET P1 et P2. Concernant le circuit d'attaque de la bascule BA1, il est encore à noter que la diode D1 est reliée par son anode à la borne d'entrée BE et que sa cathode est encore reliée à la masse par une résistance R2. L'anode de la diode D2 est aussi reliée, d'une part, au potentiel positif par une résistance R3 et à la masse par un condensateur C2.

L'entrée de bascule de la porte P1 est reliée à une entrée d'une porte NON-ET P3 dont l'autre entrée est reliée par une résistance R4 à la sortie de la porte P1. Un condensateur C3 est monté entre cette deuxième entrée de la porte P3 et la masse. La sortie de la porte P3 est reliée à une entrée d'une bascule BA2 du type $\overline{R}\,\overline{S}$. Cette bascule est également formée par deux portes NON-ET, à savoir les portes P4, P5. La deuxième entrée d'attaque de la bascule BA2 est reliée à l'entrée de la porte P2 qui forme une entrée d'attaque de la bascule BA1. La sortie de la bascule BA2 qui est formée par la sortie de la porte P5 est reliée à une entrée d'une porte NON-ET P6 dont l'autre entrée est connectée à la sortie de l'inverseur IV1. La sortie de la porte P6 est connectée à la borne de sortie B par laquelle l'agencement selon la figure est relié à un système d'alarme à enclenchement automatique.

Pour compléter la description de la figure, il est encore à noter que la borne d'entrée BE est reliée par une diode D5 à un relais RL dont l'autre borne est mise à la masse. Ce relais commande un contact r qui, à l'état d'excitation du relais, relie la borne BE à la borne de sortie BS à laquelle est branchée la bobine du dispositif d'allumage du moteur du véhicule. La borne BS est reliée à la masse par un condensateur C4. Concernant le relais RL, il est pourvu d'une diode D6 montée en parallèle.

On décrira maintenant le procédé de commande et le fonctionnement de l'agencement de mise en veille suivant l'invention.

Quand la clé de contact est dans sa position de contact, la borne d'entrée BE est à l'état "1" ce qui entraîne l'état "1" à l'entrée de l'inverseur IV1. La sortie de ce dernier étant à "0", la sortie de la porte P6 est à "1", ce qui est l'état d'inhibition du système d'alarme. Celui-ci est donc hors veille.

On met le système en veille en coupant le contact par actionnement de la clé de contact. Ceci fait passer le point A à l'état "0" et impose "1" à l'entrée de la porte P6, qui est reliée à la sortie de l'inverseur IV1. La bascule BA1 change d'état, tandis que la bascule BA2 reste inchangée et maintient l'autre entrée de la porte 6 à l'état "1". La sortie de cette porte et ainsi la borne de sortie B passe alors à l'état "0" qui met en veille le système d'alarme.

L'invention permet de mettre hors veille le système par simple remise du contact à la borne BE pendant une courte durée de temps inférieure à une durée prédéterminée, à l'aide de la seule clé de contact. En effet, le point A repasse à l'état "1", et le potentiel "0" à la sortie de l'inverseur IVI impose à la sortie de la porte P6 et à la borne de sortie B l'état "1" qui inhibe le système d'alarme. Si le contact est coupé avant l'expiration de la durée de temps susmentionnée, en raison de la temporisation introduite par la résistance R1 et du condensateur C1 à la sortie de l'inverseur IV1. La sortie de la porte P5 reste à l'état "1", ce qui entraîne la conservation de l'état d'inhibition "1" à la sortie B. Pour remettre ensuite l'état de veille, il convient de remettre la clé de contact et la maintenir dans sa position de contact pendant une durée supérieure à la durée de la temporisation pour que la borne de sortie B passe à nouveau à l'état "0" de mise en veille. A titre d'exemple, pour inhiber le système à l'aide de la clé il faut rétablir le contact pendant moins de 5 sec. tandis que la remise en veille se produit lorsque le contact est maintenu pendant plus de 7 sec.

Le dispositif de mise en veille selon l'invention pallie également à un inconvénient des systèmes d'alarme automatique existants actuellement. En effet dans ces systèmes un voleur peut supprimer l'alarme automatique en amenant par un fil du courant sur la bobine. Il établirait ainsi le contact qui bloque le système d'alarme. Cette possibilité d'inhibition du système d'alarme est éliminé dans le système selon l'invention, en prévoyant le relais RL qui isole par son contact r la borne BS de la bobine d'allumage de la borne d'entrée BE de l'agencement de mise en veille, tant qu'il n'y a pas de potentiel positif à cette borne d'entrée.

**Revendications**

1. Procédé d'éjection de la mise en veille d'un système d'alarme à enclenchement automatique notamment pour véhicule automobile, dans lequel la mise en veille se fait par actionnement d'un premier organe de commande d'un contact électrique, tel que la clé de contact, la mise hors veille avec retrait de la clé de contact s'effectuant par actionnement d'un second organe de commande d'un contact électrique, caractérisé en ce qu'on utilise comme premier et second organes de commande le même organe tel que la clé de contact et assure la mise hors veille par un rétablissement du contact pendant une durée de temps prédéterminé.

2. Agencement pour la mise en oeuvre du procédé selon la revendication 1, caractérisé en ce que les premier et second organes de contact électrique sont formés par le même organe tel que la clé de contact d'un véhicule automobile, et en ce qu'il comprend des circuits électriques adaptés pour produire un signal d'inhibition du système d'alarme en réponse à un rétablissement du contact pendant une durée prédéterminée.

3. Agencement selon la revendication 2, caractérisé en ce qu'il comprend des moyens formant bascule (BA4, BA5) et des moyens de circuit logique (P10, P13) ainsi qu'un circuit de temporisation (R23, C18) adapté pour retarder pendant une durée de temps prédéterminée un changement du potentiel de commande des moyens formant bascule (BA4, BA5) et des moyens de circuit logique (P10, P13) pour empêcher la remise en veille de l'agencement lors de la nouvelle coupure du contact.

4. Agencement selon l'une des revendications 2 à 3, caractérisé en ce qu'il comprend des moyens de protection contre une mise en veille par une liaison tel qu'un fil entre la batterie et la bobine d'allumage du moteur, comprenant essentiellement un relais (RL2) relié à l'entrée (BE5) de l'agencement et pouvu d'un contact (R2) susceptible d'isoler une borne (BS1) de connexion de la bobine en l'absence d'un potentiel à ladite borne d'entrée (BE5).